(19) Europäisches Patentamt
European Patent Office
Office européen des brevets

(11) **EP 2 681 605 B1**

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(21) Anmeldenummer: **13700773.8**

(22) Anmeldetag: **22.01.2013**

(51) Int Cl.:
*G02B 13/26* (2006.01)      *F21V 8/00* (2006.01)
*H04N 1/028* (2006.01)

(86) Internationale Anmeldenummer:
**PCT/EP2013/051136**

(87) Internationale Veröffentlichungsnummer:
**WO 2013/110605 (01.08.2013 Gazette 2013/31)**

(54) **OPTIKANORDNUNG UND VERFAHREN ZUR OPTISCHEN ABTASTUNG EINER OBJEKTEBENE MIT EINEM MEHRKANALABBILDUNGSSYSTEM**

OPTICAL ARRANGEMENT AND METHOD FOR OPTICALLY SCANNING AN OBJECT PLANE USING A MULTICHANNEL IMAGING SYSTEM

ENSEMBLE OPTIQUE ET PROCÉDÉ DE BALAYAGE OPTIQUE D'UN PLAN D'OBJET AU MOYEN D'UN SYSTÈME D'IMAGERIE À PLUSIEURS CANAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2012 DE 102012200903**

(43) Veröffentlichungstag der Anmeldung:
**08.01.2014 Patentblatt 2014/02**

(73) Patentinhaber: **Fraunhofer Gesellschaft zur Förderung der angewandten Forschung e.V.**
**80686 München (DE)**

(72) Erfinder:
• **BRÜCKNER, Andreas**
**07743 Jena (DE)**

• **BERLICH, René**
**07607 Eisenberg (DE)**
• **BRÄUER, Andreas**
**07646 Schlöben (DE)**

(74) Vertreter: **Schenk, Markus et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
DE-A1-102009 005 092      US-A1- 2002 114 152
US-A1- 2003 223 107

EP 2 681 605 B1

# Beschreibung

Ausführungsbeispiele der vorliegenden Erfindung beziehen sich auf eine Optikanordnung und ein Verfahren zur optischen Abtastung einer Objektebene mit einem Mehrkanalabbildungssystem.

Weitere Ausführungsbeispiele der vorliegenden Erfindung beziehen sich auf ein ultraflaches Beleuchtungsmodul für Multiapertur-Abbildungssysteme.

Gemäß dem Stand der Technik können Multiapertur-Abbildungssysteme bzw. Mehrkanalabbildungssysteme für die optische Abtastung einer Objektebene verwendet werden. Ein bekanntes Multiapertur-Abbildungssystem, wie es beispielsweise in der DE 10 2009 047 361 A1 beschrieben ist, ermöglicht die optische Bildaufnahme eines ausgedehnten Objektfeldes mit hoher Ortsauflösung und extrem kurzer Baulänge bei Arbeitsabständen im Bereich von einigen Millimetern. Zudem erlaubt die Anordnung eine Vergrößerung der beobachteten Objektfeldgröße ohne axiale Verlängerung des optischen Aufbaus. Dies geschieht unter Verwendung einer größeren Anzahl von optischen Abbildungskanälen.

Siehe auch DE 10 2009 005 092 A1.

Aufgrund der miniaturisierten Ausführungsform dieses bekannten Multiapertur-Abbildungssystems sowie der kurzen Arbeitsabstände (Distanz zwischen Objekt und Optik) besteht jedoch die Schwierigkeit einer ausreichenden Objektfeldbeleuchtung im Falle von Auflichtbeleuchtung (wie z.B. bei der Beobachtung nicht transparenter und nicht leuchtender Objekte). Die gewünschte große laterale Ausdehnung führt im Falle einer seitlichen Auflichtbeleuchtung zu großen Einfallswinkeln des Beleuchtungslichts und einer stark inhomogenen Beleuchtungssituation. Eine, wie in der Mikroskopie übliche, konfokale Beleuchtung durch das Abbildungsobjektiv ist aufgrund der Miniaturisierung des bekannten Abbildungssystems technisch nicht oder nur mit großem Aufwand und zu ungunsten der Baulänge umsetzbar.

Konventionelle flache Beleuchtungselemente (z.B. Anordnungen zur Displayhinterleuchtung durch mikrostrukturierte Platten oder Folien) sind zwar ausreichend dünn, beeinflussen aber den Strahlengang in der Multiapertur-Abbildungsoptik und sind somit nicht anwendbar.

Im Stand der Technik werden verschiedene Möglichkeiten für die Umsetzung einer Auflichtbeleuchtung beschrieben. Bekannte Varianten basieren beispielsweise auf einem Lichtleiter (light guide) mit verschiedenen Auskoppelmechanismen. Die verschiedenen Auskoppelmechanismen umfassen beispielsweise eine Auskoppelung durch Bumps (Beulen) oder reflektierende Teile, eine Auskoppelung durch Hologramme oder eine Nutzung von Polarisationseffekten.

Eine Auskoppelung durch Bumps bzw. reflektierende Teile wird beispielsweise in der US 6,734,929 B2, in der US 6,806,922 B2 und in der DE 102 44 444 A1 beschrieben. Die Auskoppelung durch Bumps bzw. reflektierende Teile gemäß der US 6,734,929 B2 und der US 6,806,922 B2 ist aber nicht für eine (Multiapertur-)Abbildungsoptik geeignet, da Beleuchtungselemente im Strahlengang die Abbildung beeinträchtigen würden. Ferner hat die Auskoppelung durch Bumps bzw. reflektierende Teile gemäß der DE 102 44 444 A1 den Nachteil, dass sich die Bumps bzw. reflektierenden Teile direkt im Abbildungsstrahlengang nahe der Eintrittspupille einer CCD-Kamera befinden. Dadurch ergibt sich eine Limitierung auf relativ große Durchmesser der Eintrittspupille (Große Optiken). Deshalb ist die in der DE 102 44 444 A1 beschriebene Variante ungeeignet für miniaturisierte Abbildungssysteme, wie z.B. eine Multiapertur-Abbildungsoptik oder eine Mikrooptik.

Eine Auskoppelung durch Hologramme wird beispielsweise in der US 5,465,311, in der US 5,515,184 und in der US 6,429,913 B2 beschrieben. Der Nachteil bei dieser Variante ist, dass Hologramme im Strahlengang die Abbildung beeinträchtigten würden. Ferner ist die Auskoppelung durch Hologramme gemäß der US 5,465,311, der US 5,515,184 und der US 6,429,913 B2 durch ein starkes Dispersionsverhalten gekennzeichnet. Daher ist diese Variante ungeeignet für die Beleuchtung mit spektral breitbandigem (weißem) Licht.

Eine Nutzung von Polarisationseffekten wird beispielsweise in der US 6,750,996 B2 und in der US 7,027,671 B2 beschrieben. Der Nachteil bei der Nutzung von Polarisationseffekten gemäß der US 6,750,996 B2 und der US 7,027,671 B2 ist, dass sich bei dieser Variante eine unterschiedliche Auskoppeleffizienz für die ordentliche und außerordentliche Polarisationsrichtung aufgrund des Brechungsindexunterschieds im doppelbrechenden Medium ergibt.

Eine konventionelle Mikroskop-Auflichtbeleuchtung mittels eines Strahlteilers stellt weiteren Stand der Technik dar. Hierbei erfolgt beispielsweise die Umlenkung von seitlich einstrahlendem Beleuchtungslicht durch Strahlteilerwürfel oder -Quader. Diese konventionelle Technik ist jedoch für miniaturisierte Abbildungssysteme sowie Objektentfernungen von wenigen Millimetern bei gleichzeitig ausgedehnten Objektfeldern von mehreren Quadratzentimetern nicht geeignet, da die Dicke des Strahlteilers mit der zu beleuchtenden Fläche skaliert. Dies steht einer axialen Miniaturisierung entgegen.

Ein generelles Problem ist somit, dass im bekannten Stand der Technik kein Konzept existiert, welches eine Auflichtbeleuchtung bei einer Mehrkanalabbildung eines lateral ausgedehnten nahen Objektfelds, also mit einem geringen Abstand des Objektfelds zu einer Optikanordnung, bei einer hohen Bildqualität mit einer geringen Bauhöhe der Optikanordnung vereint.

Die Aufgabe der vorliegenden Erfindung besteht daher darin, ein Konzept zu schaffen, welches die Auflichtbeleuchtung für eine optische Mehrkanalabbildung eines lateral ausgedehnten nahen Objektfelds mit einer höheren Bildqualität und gleichzeitig eine geringere Bauhöhe der Optikanordnung ermöglicht.

Diese Aufgabe wird durch eine Optikanordnung nach Anspruch 1 und ein Verfahren nach Anspruch 23 gelöst.

Ausführungsbeispiele der vorliegenden Erfindung schaffen eine Optikanordnung mit einem Mehrkanalabbildungssystem zur optischen Abtastung einer Objektebene in in der Objektebene aneinandergrenzenden oder überlappenden Gesichtsfeldern einer Mehrzahl von optischen Kanälen des Mehrkanalabbildungssystems und einem Wellenleiter, der zwischen der Objektebene und dem Mehrkanalabbildungssystem angeordnet ist, um Licht im Wellenleiter lateral zu führen. Der Wellenleiter weist eine Mehrzahl von Umlenkstrukturen auf, die auf einer der Objektebene zugewandten Seite und/oder auf einer dem Mehrkanalabbildungssystem zugewandten Seite des Wellenleiters angeordnet sind. Hierbei sind die Umlenkstrukturen in Totzonen zwischen den Gesichtsfeldern der optischen Kanäle angeordnet. Ferner sind die Umlenkstrukturen ausgelegt, um das geführte Licht in Richtung der Objektebene abzulenken, so dass die Objektebene beleuchtet wird.

Der Kerngedanke der vorliegenden Erfindung ist es, dass die oben genannte höhere Bildqualität bei einer gleichzeitig geringeren Bauhöhe der Optikanordnung erreicht werden kann, wenn Licht in einem Wellenleiter, der zwischen der Objektebene und dem Mehrkanalabbildungssystem angeordnet ist, lateral geführt wird, die Umlenkstrukturen in Totzonen zwischen den Gesichtsfeldern der optischen Kanäle angeordnet sind und das geführte Licht in Richtung der Objektebene mit den Umlenkstrukturen abgelenkt wird, so dass die Objektebene beleuchtet wird. Somit kann einerseits die höhere Bildqualität bzw. eine verbesserte Mehrkanalabbildung erreicht werden, und andererseits kann gleichzeitig eine geringere Bauhöhe der Optikanordnung realisiert werden. Hierbei kann von einem lateralen Führen des Lichts im Wellenleiter Gebrauch gemacht und eine spezielle Anordnung der Umlenkstrukturen in Totzonen zwischen den Gesichtsfeldern der optischen Kanäle verwendet werden.

Bei Ausführungsbeispielen der vorliegenden Erfindung können die Umlenkstrukturen auf der dem Mehrkanalabbildungssystem zugewandten Seite des Wellenleiters eine Mehrzahl von Mikrolinsen aufweisen, die in Richtung des Mehrkanalabbildungssystems gewölbt und mit einer reflektierenden Schicht versehen sind. Durch diese Anordnung der Mikrolinsen kann das im Wellenleiter geführte Licht effizient in Richtung der Objektebene ausgekoppelt werden. Somit kann eine Beleuchtung der Objektebene mit einer vergleichsweise hohen Beleuchtungseffizienz erreicht werden.

Ausführungsbeispiele der vorliegenden Erfindung werden nachfolgend Bezug nehmend auf die beiliegenden Figuren, in denen gleiche oder gleichwirkende Elemente mit gleichen Bezugszeichen bezeichnet sind, näher erläutert. Es zeigen:

Fig. 1    eine Seitenansicht einer Optikanordnung gemäß einem Ausführungsbeispiel der vorliegenden Erfindung;

Fig. 2    eine Frontansicht eines Ausführungsbeispiels eines Wellenleiters zur Verdeutlichung von Totzonen zwischen Gesichtsfeldern von mehreren optischen Kanälen;

Fig. 3    eine Seitenansicht eines weiteren Ausführungsbeispiels eines Wellenleiters mit einer Mehrzahl von Mikrolinsen; und

Fig. 4    eine Frontansicht des Ausführungsbeispiels des Wellenleiters gemäß Fig. 3.

Bevor im Folgenden die vorliegende Erfindung anhand der Figuren näher erläutert wird, wird darauf hingewiesen, dass in den nachfolgend dargestellten Ausführungsbeispielen gleiche Elemente oder funktionell gleiche Elemente in den Figuren mit den gleichen Bezugszeichen versehen sind. Eine Beschreibung von Elementen mit gleichen Bezugszeichen ist daher gegenseitig austauschbar und/oder in den verschiedenen Ausführungsbeispielen aufeinander anwendbar.

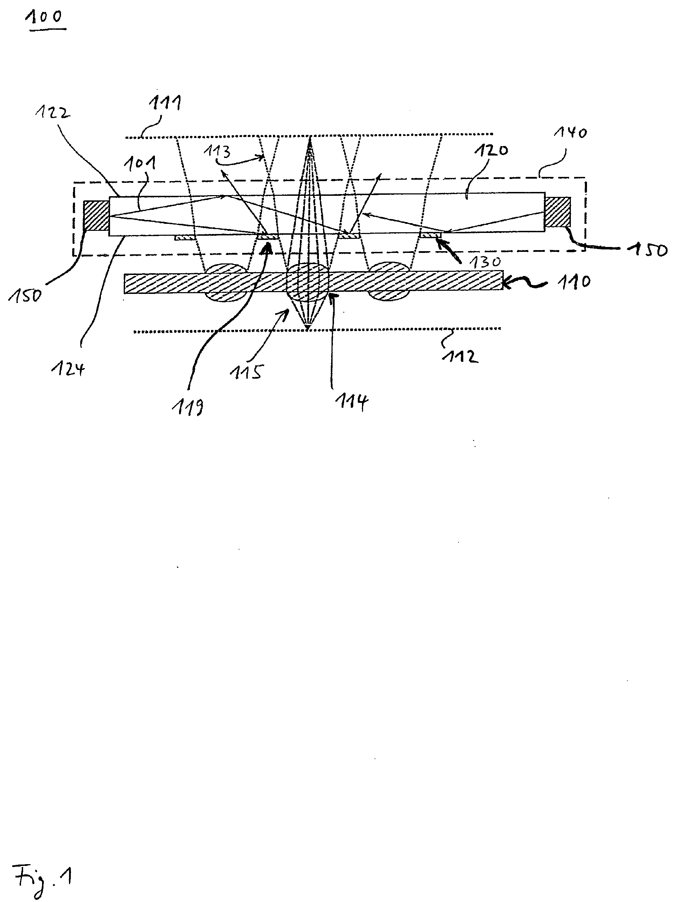

Fig. 1 zeigt eine Seitenansicht einer Optikanordnung 100 gemäß einem Ausführungsbeispiel der vorliegenden Erfindung. Bei dem in Fig. 1 gezeigten Ausführungsbeispiel weist die Optikanordnung 100 ein Mehrkanalabbildungssystem 110 und einen Wellenleiter 120 mit einer Mehrzahl von Umlenkstrukturen 130 auf. Das Mehrkanalabbildungssystem 110 der Optikanordnung 100 ist ausgelegt, um eine optische Abtastung einer Objektebene 111 in in der Objektebene 111 aneinandergrenzenden oder überlappenden Gesichtsfeldern 113 einer Mehrzahl von optischen Kanälen 115 des Mehrkanalabbildungssystems 110 durchzuführen. Ferner ist der Wellenleiter 120 der Optikanordnung 100 zwischen der Objektebene 111 und dem Mehrkanalabbildungssystem 110 angeordnet, um Licht 101 im Wellenleiter 120 lateral zu führen. Wie in Fig. 1 gezeigt, weist der Wellenleiter 120 eine Mehrzahl von Umlenkstrukturen 130 auf. Die Umlenkstrukturen 130 können auf einer der Objektebene 111 zugewandten Seite 122 und/oder auf einer dem Mehrkanalabbildungssystem 110 zugewandten Seite 124 des Wellenleiters 120 angeordnet sein.

Bei dem in Fig. 1 gezeigten Ausführungsbeispiel sind die Umlenkstrukturen 130 in Totzonen 119 zwischen des Gesichtsfeldern 113 der optischen Kanäle 115 angeordnet. Ferner sind die Umlenkstrukturen 130 ausgelegt, um das geführte Licht 101 in Richtung der Objektebene 111 abzulenken, so dass die Objektebene 111 beleuchtet wird.

Eine laterale Richtung ist definiert als eine Richtung, die im Wesentlichen parallel zu einer Oberfläche (Seite 122 oder 124) des Wellenleiters 120 ist.

Bei weiteren Ausführungsbeispielen kann die Optikanordnung 100 ferner eine oder mehrere Lichtquellen 150 aufweisen, die seitlich neben dem Wellenleiter 120 angeordnet sind. Hierbei sind die eine oder mehreren Lichtquellen 150 ausgelegt, um Licht 101 seitlich in den Wellenleiter 120 einzukoppeln.

In der Seitenansicht von Fig. 1 sind solche Lichtquellen 150 beispielhaft dargestellt. Die Lichtquellen 150 bilden zusammen mit dem Wellenleiter 120 und den Umlenkstrukturen 130 ein Beleuchtungsmodul 140. Das Beleuchtungsmodul 140 der Optikanordnung 100 ist in Fig. 1 durch eine gestrichelte Linie angedeutet.

Bei Ausführungsbeispielen weist das Mehrkanalabbildungssystem 110 für jeden optischen Kanal 115 eine Optik 114 mit einer Feldblende auf, die das Gesichtsfeld 113 des jeweiligen Kanals 115 bestimmt.

Bei Ausführungsbeispielen gemäß Fig. 1 kann die Optik 114 jedes einzelnen Kanals 115 des Mehrkanalabbildungssystems 110 eine Zwischenbildebene aufweisen, in der eine Blende (Feldblende) angeordnet ist. Die Feldblende der jeweiligen Optik 114 kann beispielsweise durch die in der Zwischenbildebene angeordnete Blende definiert sein. Wie es in Fig. 1 angedeutet ist, kann die jeweilige Optik 114 ein beispielsweise bezüglich der Zwischenbildebene symmetrisches Linsensystem sein. Hierbei können Linsen des symmetrischen Linsensystems beispielsweise identisch sein und eine gleiche Funktionsweise aufweisen.

Bei Ausführungsbeispielen ist das Mehrkanalabbildungssystem 110 ausgelegt, um die Objektebene 111 über die Mehrzahl von optischen Kanälen 115 auf eine Bildebene 112 abzubilden, so dass sich in der Bildebene 112 ein Füllfaktor zwischen 90 und 100 % ergibt. Durch die Abbildung der Objektebene über die mehreren optischen Kanäle auf die Bildebene oder einen Bildsensor wird eine Mehrkanalabbildung realisiert. Die Mehrkanalabbildung kann beispielsweise eine kanalweise 1:1 Abbildung von Teilbereichen der Objektebene auf die Bildebene sein. Die kanalweise 1:1 Abbildung kann beispielsweise durch eine symmetrische Anordnung jedes einzelnen optischen Kanals erreicht werden. Ferner kann durch eine andere Anordnung des jeweiligen optischen Kanals auch ein anderer Abbildungsmaßstab für die Mehrkanalabbildung erhalten werden.

Bei der Mehrkanalabbildung gemäß dem Ausführungsbeispiel von Fig. 1 sind die Umlenkstrukturen 130 in einer Ebene angeordnet, die sich zwischen der Bildebene 112 und der Objektebene 111 befindet. In der Ebene, in der die Umlenkstrukturen 130 angeordnet sind, überlappen sich die Gesichtsfelder 113 der optischen Kanäle 115 nicht.

Bei Ausführungsbeispielen umfassen die optischen Kanäle des Mehrkanalabbildungssystems jeweils eine Optik mit einer Feldblende bzw. ein Einzelkanalabbildungssystem für eine Abbildung eines Teilbereichs der Objektebene in einem der in der Objektebene aneinandergrenzenden oder überlappenden Gesichtsfelder des jeweiligen Kanals auf die Bildebene oder einen Bildsensor (Multiapertur-Abbildungssystem). Ein einzelner optischer Kanal ist hierbei durch einen Strahlengang bei der Abbildung durch die jeweilige Optik bzw. das Einzelabbildungssystem zwischen der Objektebene und der Bildebene definiert. Bei Ausführungsbeispielen kann jeder Teilbereich der Objektebene über einen zugeordneten optischen Kanal des Mehrkanalabbildungssystems abgebildet werden (optische Abtastung). Die Gesichtsfelder der einzelnen optischen Kanäle sind in Fig. 1 durch gepunktete Linien 113 beispielhaft dargestellt.

Bei weiteren Ausführungsbeispielen sind die Umlenkstrukturen 130 auf der dem Mehrkanalabbildungssystem 110 zugewandten Seite 124 des Wellenleiters 120 ausgelegt, um das geführte Licht 101 in Richtung der Objektebene 111 zu streuen oder zu reflektieren. Durch die Streuung oder Reflexion des im Wellenleiter geführten Lichts in Richtung der Objektebene kann Licht aus dem Wellenleiter ausgekoppelt werden, um die Objektebene zu beleuchten. Dies wird dadurch erreicht, dass das an den Umlenkstrukturen 130 (auf der Seite 124 des Wellenleiters 120) gestreute oder reflektierte Licht unter solch einem Winkel auf die der Objektebene 111 zugewandte Seite 122 des Wellenleiters 120 trifft, der kleiner oder gleich einem Grenzwinkel der Totalreflexion an dieser Seite bzw. Grenzfläche ist.

Ferner können bei weiteren Ausführungsbeispielen Umlenkstrukturen auf der Seite 122 des Wellenleiters 120 in Totzonen 119 zwischen den Gesichtsfeldern 113 der optischen Kanäle 115 angeordnet sein (nicht gezeigt in Fig. 1). Die Umlenkstrukturen auf der Seite 122 des Wellenleiters 120 können beispielsweise Auskoppelstrukturen mit einer in Richtung der Objektebene 111 gewölbten Oberfläche sein, wodurch ein Winkel, unter dem Licht 101 vom Wellenleiter 120 auf die Oberfläche der Auskoppelstrukturen trifft, so verringert werden kann (Winkel kleiner oder gleich einem Grenzwinkel der Totalreflexion), dass das im Wellenleiter 120 geführte Licht 101 an den Auskoppelstrukturen in Richtung der Objektebene 111 ausgekoppelt wird.

Im Übrigen kann das Licht durch Totalreflexion an der der Objektebene 111 zugewandten Seite 122 und der dem Mehrkanalabbildungssystem 110 zugewandten Seite 124 des Wellenleiters 120 im Wellenleiter 120 lateral geführt werden. Hierbei tritt die Totalreflexion an den Seiten 122, 124 bzw. an den Grenzflächen des Wellenleiters 120 nur an solchen Abschnitten der Grenzflächen auf, wo sich die Umlenkstrukturen bzw. Auskoppelstrukturen nicht befinden.

In Bezug auf Fig. 1 wird somit eine Optikanordnung 100 mit einem Mehrkanalabbildungssystem 110 zur optischen Abtastung einer Objektebene 111 realisiert. Wie in Fig. 1 gezeigt, ist das Beleuchtungsmodul 140 getrennt vom Multiapertur-Abbildungssystem bzw. Mehrkanalabbildungssystem 110 platziert und kann somit optional je nach Anwendungsfall eingesetzt werden. Das Beleuchtungsmodul sollte dafür in einer lateralen Ebene, die im Wesentlichen parallel zu einer Oberfläche des Wellenleiters 120 ist, relativ zu einem Kanalraster der Multiapertur-Abbildungsoptik bzw. des Mehrkanalabbildungssystems 110 justiert werden. Hierbei ist das Kanalraster beispielsweise durch eine Mehrzahl von optischen Achsen der Kanäle des Mehrkanalabbildungssystems definiert.

Die Lichtquellen 150 (z.B. LEDs, light emitting diodes) emittieren Licht 101 in den Wellenleiter 120, der beispielsweise eine Lichtwellenleiterplatte (z.B. Glassubstrat) sein kann, wobei das Licht 101 bzw. die Strahlen durch Totalreflexion geführt werden und sich somit im gesamten Wellenleiter 120 bzw. in der gesamten Lichtwellenleiterplatte ausbreiten können. Bildseitig (oder auch objektseitig) können auf dem Lichtwellenleiter Umlenkstrukturen 130, wie z.B. Mikrostrukturen, flächig aufgebracht werden, deren laterale Gesamtausdehnung an den zu beleuchtenden Objektbereich in der Objektebene angepasst werden kann. An den Positionen der Umlenkstrukturen 130 bzw. Mikrostrukturen können die geführten Strahlen 101 mit den Umlenkstrukturen bzw. Mikrostrukturen abgelenkt werden. Die Umlenkstrukturen 130 bzw. Mikrostrukturen ermöglichen somit eine Auskoppelung des Lichts aus dem Lichtwellenleiter 120.

Bei Ausführungsbeispielen sind die Umlenkstrukturen 130 bzw. Mikrostrukturen so positioniert, dass sie außerhalb der Gesichtsfelder 113 der einzelnen Kanäle 115 des Multiapertur-Abbildungssystems bzw. Mehrkanalabbildungssystems 110 liegen (Ausnutzung der Totzonen 119), so dass dadurch die Bildgebung nicht beeinträchtigt wird.

In der in Fig. 1 gezeigten Optikanordnung kann durch die Verwendung des Wellenleiters mit der Mehrzahl von Umlenkstrukturen zum einen eine effiziente Beleuchtung der Objektebene erreicht werden. Zum anderen kann durch die spezielle Anordnung der Umlenkstrukturen in Totzonen zwischen den Gesichtsfeldern der optischen Kanäle eine Beeinträchtigung der Mehrkanalabbildung über die mehreren optischen Kanäle vermieden werden. Somit kann eine höhere Bildqualität bzw. eine verbesserte Mehrkanalabbildung erreicht werden. Dies ergibt sich vor allem daraus, dass die Umlenkstrukturen in den Totzonen und nicht im Strahlengang der jeweiligen Kanäle zwischen der Objektebene und der Bildebene liegen.

In der schematischen Seitenansicht von Fig. 1 ist somit der Einsatz eines vergleichsweise dünnen Beleuchtungsmoduls 140 in Verbindung mit einem MultiaperturAbbildungssystem bzw. Mehrkanalabbildungssystem 110 gezeigt, welches die Objektebene 111 auf die Bildebene (bzw. den Bildsensor) 112 abbildet. Das Beleuchtungsmodul 140 gewährleistet dabei eine Auflichtbeleuchtung auf die Objektebene 111, indem das von den seitlichen angebrachten Lichtquellen 150 emittierte Licht 101 innerhalb eines Wellenleiters 120 bzw. einer Lichtwellenleiterplatte geführt und durch die örtlich ausgeführten Umlenkstrukturen 130 bzw. Mikrostrukturen in Richtung der Objektebene 111 ausgekoppelt wird. Das Beleuchtungsmodul 140 ist dabei so zu dem Multiapertur-Abbildungssystem 110 platziert, dass sich die auskoppelnden Mikrostrukturen außerhalb der Gesichtsfelder der einzelnen Kanäle 115 des Multiapertur-Abbildungssystems 110 befinden. Dies hat den Vorteil, dass der Abbildungsstrahlengang somit idealerweise von der Beleuchtungseinheit bzw. dem Beleuchtungsmodul nicht beeinflusst wird. Somit kann eine höhere Bildqualität bei der Mehrkanalabbildung über die mehreren optischen Kanäle erreicht werden.

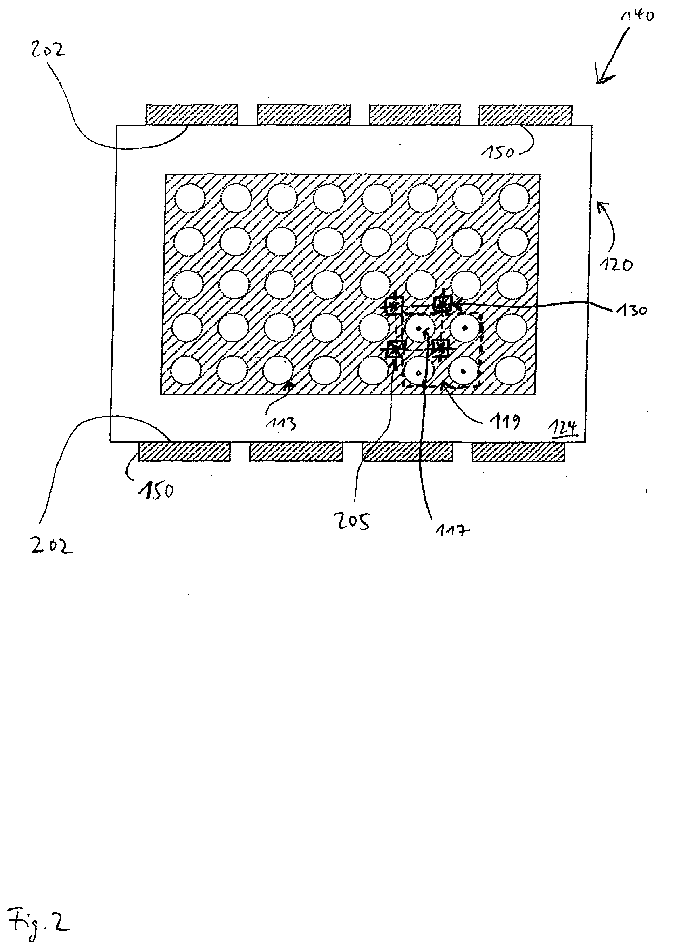

Fig. 2 zeigt eine Frontansicht eines Ausführungsbeispiels eines Wellenleiters 120 zur Verdeutlichung von Totzonen zwischen Gesichtsfeldern von mehreren optischen Kanälen. Das in Fig. 2 gezeigte Ausführungsbeispiel des Wellenleiters 120 kann ein Teil des in Fig. 1 gezeigten Beleuchtungsmoduls 140 sein. In der Frontansicht von Fig. 2 ist die dem Mehrkanalabbildungssystem 110 zugewandte Seite 124 des Wellenleiters 120 zu erkennen. Bei Ausführungsbeispielen gemäß Fig. 1 und 2 sind die Kanäle 115 des Mehrkanalabbildungssystems 110 zweidimensional verteilt, und der Wellenleiter 120 ist als eine Lichtwellenleiterplatte ausgebildet. In der Frontansicht von Fig. 2 sind die Totzonen 119 zwischen den Gesichtsfeldern 113 der zweidimensional verteilten optischen Kanäle deutlich zu erkennen. Wie in Fig. 2 gezeigt, erstrecken sich die Totzonen 119 zwischen den Gesichtsfeldern 113 in einer Ebene, die im Wesentlichen parallel zu einer Oberfläche der Lichtwellenleiterplatte ist. Der Bereich, in dem sich die Totzonen 119 zwischen den Gesichtsfeldern 113 erstrecken, ist in der Frontansicht von Fig. 2 durch eine schraffierte Fläche dargestellt. Ferner sind die Umlenkstrukturen 130, die auf der dem Mehrkanalabbildungssystem 110 zugewandten Seite 124 des Wellenleiters 120 angeordnet sind, in der Frontansicht von Fig. 2 gezeigt.

Bei Ausführungsbeispielen ist die Lichtwellenleiterplatte 120 rechteckig geformt, wobei die Optikanordnung ferner eine oder mehrere Lichtquellen 150 aufweist, die seitlich neben der rechteckig geformten Lichtwellenleiterplatte 120 angeordnet sind (siehe Fig. 2). Hierbei können die einen oder mehreren Lichtquellen 150 ausgelegt sein, um Licht von einer längeren Seite 202 der rechteckig geformten Lichtwellenleiterplatte 120 in dieselbe einzukoppeln. Durch das Einkoppeln des Lichts von der längeren Seite 202 der rechteckig geformten Lichtwellenleiterplatte 120 können Totalreflexionsverluste, die beim lateralen Führen des Lichts in der Lichtwellenleiterplatte 120 zu einem zentralen Bereich derselben auftreten können, verringert werden, da der Abstand von der längeren Seite 202 der rechteckig geformten Lichtwellenleiterplatte 120 zu dem zentralen Bereich derselben vergleichsweise gering ist. Somit kann im zentralen Bereich der Lichtwellenleiterplatte 120 ausreichend Licht für die Beleuchtung der Objektebene bereitgestellt werden.

In Fig. 2 ist somit eine schematische Frontansicht des vergleichsweise dünnen Beleuchtungsmoduls 140 mit der Lichtwellenleiterplatte 120 und mit mindestens an einer Stirnseite (z.B. der längeren Seite 202 der rechteckig geformten Lichtwellenleiterplatte 120) angebrachten Lichtquellen 150 dargestellt. Die örtlich ausgeführten Umlenkstrukturen 130 bzw. Mikrostrukturen befinden sich in Zonen (Totzonen) außerhalb der Gesichtsfelder 113 der einzelnen Kanäle des Multiapertur-Abbildungssystems (bzw. Mehrkanalabbildungssystems). Bei Ausführungsbeispielen ist die laterale Gesamtausdehnung der Umlenkstrukturen bzw. Mikrostrukturen an den zu beleuchtenden Objektbereich angepasst. Somit kann eine optimale Beleuchtung der Objektebene 111 erreicht werden.

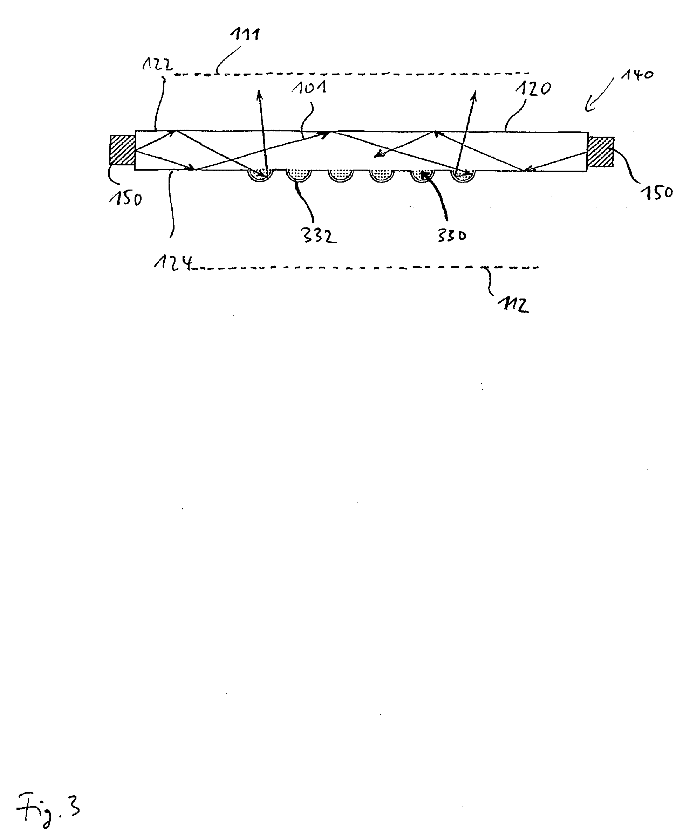

Fig. 3 zeigt eine Seitenansicht eines weiteren Ausführungsbeispiels eines Wellenleiters 120 mit einer Mehrzahl von Mikrolinsen 330. Der in Fig. 3 gezeigte Wellenleiter 120 mit den Lichtquellen 150 entspricht im Wesentlichen dem in Fig. 1 gezeigten Beleuchtungsmodul 140. Bei dem in Fig. 3 gezeigten Ausführungsbeispiel weisen die Umlenkstrukturen auf der dem Mehrkanalabbildungssystem 110 zugewandten Seite 124 des Wellenleiters 120 eine Mehrzahl von Mikrolinsen 330 auf, die in Richtung des Mehrkanalabbildungssystems 110 gewölbt und mit einer reflektierenden Schicht 332 versehen sind. Das Mehrkanalabbildungssystem, in dessen Richtung die Mikrolinsen 330 gewölbt sind und welches sich zwischen der Bildebene 112 und dem Wellenleiter 120 befindet, ist in Fig. 3 nicht gezeigt. Bei Ausführungsbeispielen gemäß Fig. 3 sind die mit der reflektierenden Schicht 332 versehenen Mikrolinsen 330 ausgelegt, um das im Wellenleiter 120 geführte Licht 101 möglichst verlustfrei zu reflektieren und so abzulenken, dass es aus dem Wellenleiter 120 ausgekoppelt wird. Auf diese Weise kann die Objektebene 111 mit einer vergleichsweise hohen Beleuchtungseffizienz beleuchtet werden.

In der schematischen Seitenansicht von Fig. 3 ist somit eine Ausführungsform des dünnen Beleuchtungsmoduls 140 mit der Lichtwellenleiterplatte 120 und mit mindestens an einer Stirnseite der Lichtwellenleiterplatte angebrachten Lichtquellen 150 dargestellt. Die örtlich ausgeführten Umlenkstrukturen 130 bzw. Mikrostrukturen können durch Mikrolinsen 330 gebildet werden, die im Falle der Positionierung auf der objektabgewandten Seite (Seite 124) des Lichtwellenleiters 120 eine zusätzliche Verspiegelungsschicht (z.B. Metallschicht) bzw. reflektierende Schicht 332 aufweisen. Aufgrund dieser Anordnung kann das innerhalb des Wellenleiters 120 bzw. der Lichtwellenleiterplatte geführte Licht 101 in Richtung der Objektebene 111 zum Zwecke einer effizienten Objektbeleuchtung ausgekoppelt werden.

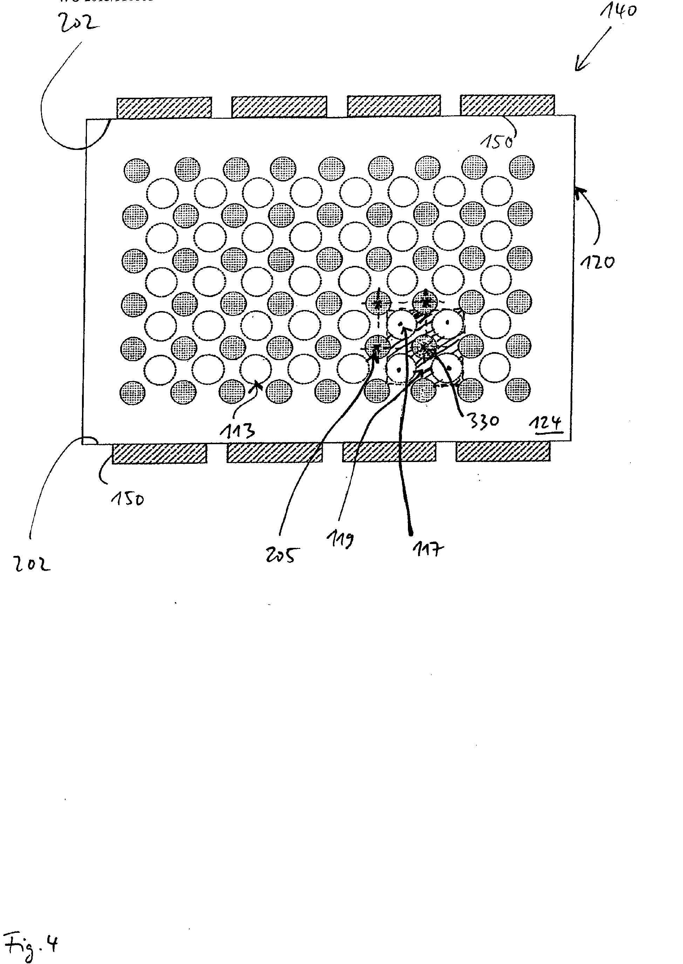

Fig. 4 zeigt eine Frontansicht des Ausführungsbeispiels des Wellenleiters 120 gemäß Fig. 3. In der Frontansicht von Fig. 4 ist die dem Mehrkanalabbildungssystem 110 zugewandte Seite 124 des Wellenleiters 120 zu erkennen. Das in Fig. 4 gezeigte Ausführungsbeispiel des Wellenleiters 120 kann ein Teil des in Fig. 1 gezeigten Beleuchtungsmoduls 140 sein. Ferner sind in Fig. 4 die Gesichtsfelder 113 der optischen Kanäle mit den dazwischen liegenden Totzonen 119 beispielhaft dargestellt. Bei dem Ausführungsbeispiel gemäß Fig. 4 sind in den außerhalb der Gesichtsfelder 113 liegenden Totzonen 119 jeweils die Mikrolinsen 330 angeordnet.

In Fig. 4 ist somit eine schematische Frontansicht einer Ausführungsform des dünnen Beleuchtungsmoduls 140 mit der Lichtwellenleiterplatte 120 und mit mindestens an einer Stirnseite der Lichtwellenleitelplatte 120 angebrachten Lichtquellen 150 dargestellt. Die örtlich ausgeführten Umlenkstrukturen 130 bzw. Mikrostrukturen können hierbei durch Mikrolinsen 330 gebildet werden, die im Falle einer beispielhaften kartesischen Anordnung der optischen Kanäle des Multiapertur-Abbildungssystems bzw. Mehrkanalabbildungssystems 110 und demnach auch einer kartesischen Verteilung der Gesichtsfelder 113 der Abbildungskanäle (bzw. der optischen Kanäle) ebenfalls in einem beispielhaften kartesischen Raster in den Zwischenräumen der Gesichtsfeldbereiche 113 bzw. in den Totzonen 119 angeordnet sein können.

Bei Ausführungsbeispielen sind die Umlenkstrukturen 130 bzw. Mikrolinsen 330 auf der dem Mehrkanalabbildungssystem 110 zugewandten Seite 124 des Wellenleiters 120 an Gitterplätzen eines Gitters 205 angeordnet (siehe Fig. 2 und 4). Bezug nehmend auf Fig. 1 weist das Mehrkanalabbildungssystem 110 für jeden Kanal 115 eine Optik 114 auf. Bei Ausführungsbeispielen können optische Achsen 117 der Kanäle 115 an Zwischengitterplätzen des Gitters 205 angeordnet sein. Dies ist beispielhaft in Fig. 2 und 4 dargestellt. Durch die symmetrische Anordnung der optischen Achsen 117 der Kanäle 115 an den Zwischengitterplätzen des Gitters 205 kann eine besonders homogene Beleuchtung der Objektebene erzielt werden.

Bei Ausführungsbeispielen kann das Gitter 205 ein regelmäßiges kartesisches oder hexagonales Gitter sein.

Bei Ausführungsbeispielen ist eine Dichte, mit welcher optische Achsen 117 der optischen Kanäle 115 des Mehrkanalabbildungssystems 110 lateral verteilt sind, konstant (siehe z.B. Fig. 2 und 4).

Ferner sind bei Ausführungsbeispielen gemäß Fig. 2 und 4 die Gesichtsfelder 113 aller Kanäle 115 gleich.

Bei weiteren Ausführungsbeispielen weisen die Umlenkstrukturen 130 auf der dem Mehrkanalabbildungssystem 110 zugewandten Seite 124 des Wellenleiters 120 eine Mehrzahl von adaptiven Mikrolinsen 330 auf (siehe z.B. Fig. 3). Hierbei können die adaptiven Mikrolinsen 330 ausgelegt sein, um eine Auskoppeleffizienz des im Wellenleiter 120 geführten Lichts 101 in Richtung der Objektebene 111 zeitlich zu variieren. Die adaptiven Mikrolinsen können beispielsweise so gesteuert werden, dass sich ihr Oberflächenprofil zeitlich ändert. Durch die zeitliche Variation des Oberflächenprofils und somit einer Auskoppeleffizienz des geführten Lichts aus dem Wellenleiter kann die Beleuchtungsstärke für die Beleuchtung der Objektebene in der Zeit eingestellt werden.

Bei weiteren Ausführungsbeispielen weist der Wellenleiter 120 eine Antireflexionsschicht auf, die auf der der Objektebene 111 zugewandten Seite 122 des Wellenleiters 120 angeordnet ist. Somit können Rückreflexe in die Gesichtsfelder 113 der optischen Kanäle 115 verhindert werden, was die Bildqualität weiter erhöhen kann. Durch das Vorsehen der Antireflexionsschicht auf der Seite 122 des Wellenleiters 120 kann eine Reflexion von ankommendem Licht, das beispielsweise bei einer diffusen Streuung an der Objektebene entsteht, vermieden werden.

Bei Ausführungsbeispielen weist die Optikanordnung 100 ferner eine oder mehrere Lichtquellen 150 und zugeordnete optische Filter auf. Beispielsweise sind die eine oder mehreren Lichtquellen 150 ausgelegt, um Licht 101 mit einer spektralen Eingangsbandbreite für die Einkopplung in den Wellenleiter 120 zu liefern. Ferner können die optischen Filter ausgelegt sein, um die spektrale Eingangsbandbreite des von der einen oder mehreren Lichtquellen 150 gelieferten Lichts 101 zu modifizieren. Hierbei ist die Optikanordnung 100 ausgelegt, um das in Richtung der Objektebene 111 abgelenkte Licht 101 mit einer modifizierten spektralen Ausgangsbandbreite für die Beleuchtung der Objektebene 111 zu erhalten.

Bei weiteren Ausführungsbeispielen weist die Optikanordnung 100 die eine oder mehreren Lichtquellen 150 auf. Beispielsweise sind die eine oder mehreren Lichtquellen 150 ausgelegt, um Licht 101 mit einer spektralen Eingangsbandbreite für die Einkopplung in den Wellenleiter 120 zu liefern. Ferner kann der Wellenleiter 120 ausgelegt sein, um die spektrale Eingangsbandbreite des von der einen oder mehreren Lichtquellen 150 gelieferten Lichts 101 zu modifizieren. Hierbei ist die Optikanordnung 100 ausgelegt, um das in Richtung der Objektebene 111 abgelenkte Licht 101 mit einer modifizierten spektralen Ausgangsbandbreite für die Beleuchtung der Objektebene 111 zu erhalten.

Bei weiteren Ausführungsbeispielen ist die modifizierte spektrale Ausgangsbandbreite kleiner als die spektrale Eingangsbandbreite.

Somit kann eine Modifikation der spektralen Charakteristik für die Beleuchtung der Objektebene erreicht werden. Die optischen Filter können beispielsweise dazu verwendet werden, um die spektrale Bandbreite des Beleuchtungslichts einzuschränken. Beispielsweise können die optischen Filter der einen oder mehreren Lichtquellen nachgeschaltet sein. Zur Einschränkung der spektralen Bandbreite des Beleuchtungslichts durch die optischen Filter kann die Lichteinkopplung beispielsweise senkrecht zu dem als Lichtwellenleiterplatte ausgebildeten Wellenleiter erfolgen. Bei der senkrechten Lichteinkopplung in den Wellenleiter kann beispielsweise eine Ablenkstruktur verwendet werden, die das senkrecht einfallende Licht der einen oder mehreren Lichtquellen so ablenkt, dass dasselbe seitlich in die Lichtwellenleiterplatte bzw. den Wellenleiter eingekoppelt und lateral geführt wird. Ferner kann die Modifikation des Beleuchtungslichts durch eine Kombination mit einer zusätzlichen strahlformenden Mikrooptik (z.B. Mikrolinse), die der einen oder mehreren Lichtquellen nachgeschaltet ist, bewirkt werden.

Darüber hinaus kann der Wellenleiter bzw. die Lichtwellenleiterplatte oder das Lichtleitersubstrat selbst ein spektrales Volumen-Filterglas darstellen (z.B. ohne dass zusätzliche optische Filter verwendet werden). Die Verwendung des Lichtleitersubstrats als beispielsweise spektrales Volumen-Filterglas erlaubt somit die Beleuchtung der Objektebene ausschließlich in einem endlichen Spektralbereich (z.B. Bandpassbereich des Filterglases) und die Absorption eines dazu komplementären Spektralbereichs (z.B. Absorptionsbereich des Filterglases). Somit kann die spektrale Charakteristik der Beleuchtung der Objektebene geeignet modifiziert werden.

Bei Ausführungsbeispielen kann sich zwischen benachbarten Umlenkstrukturen 130 ein Parameter derselben lateral ändern, wobei der Parameter eine Eigenschaft eines Oberflächenprofils beschreibt.

Bei Ausführungsbeispielen kann dieser Parameter (z.B. Krümmungsradius oder Konik des Oberflächenprofils einer Mikrolinse) derart lateral geändert werden, dass eine Auskoppeleffizienz von Umlenkstrukturen bzw. Mikrolinsen, die sich in der Nähe von einem Lichteinkopplungsbereich bzw. in Randbereichen des Wellenleiters bzw. der Lichtwellenleiterplatte befinden, im Vergleich zu einer Auskoppeleffizienz von Umlenkstrukturen bzw. Mikrolinsen, die sich in einem zentralen Bereich des Wellenleiters bzw. der Lichtwellenleiterplatte befinden, kleiner ist. Durch eine höhere Auskoppeleffizienz der Umlenkstrukturen bzw. Mikrolinsen in einem zentralen Bereich des Wellenleiters bzw. der Lichtwellenleiterplatte können Totalreflexionsverluste, die beim lateralen Führen des Lichts von dem Lichteinkopplungsbereich zu dem zentralen Bereich des Wellenleiters bzw. der Lichtwellenleiterplatte entstehen, ausgeglichen werden, so dass in der Objektebene eine im Wesentlichen homogene Beleuchtung erzielt werden kann.

Im Ausführungsbeispiel mit verspiegelten (bzw. mit der reflektierenden Schicht versehenen) Mikrolinsen auf der Bildseite (Seite 124) des Wellenleiters 120 kann eine Erhöhung der Auskoppeleffizienz z.B. durch eine Verringerung des Krümmungsradius bei beispielsweise gleicher Fläche der Mikrolinsen erreicht werden. Bei konstantem Krümmungsradius kann außerdem bei einem bestimmten (negativen) Wert der Konik ein Maximum der Auskoppeleffizienz erreicht werden. Konikwerte um dieses lokale Maximum führen zu einer zunehmenden Abnahme der Auskoppeleffizienz.

Ferner kann sich bei weiteren Ausführungsbeispielen eine Flächenbelegungsdichte der Umlenkstrukturen 130 auf dem Wellenleiter 120 lateral ändern. Bezug nehmend auf Fig. 2 und 4 ist die Flächenbelegungsdichte beispielsweise lokal durch eine Belegung der Fläche einer jeweiligen Totzone 119 mit den Umlenkstrukturen 130 oder den Mikrolinsen 330 definiert. Beispielsweise kann die Flächenbelegungsdichte der Umlenkstrukturen bzw. Mikrolinsen in einem zentralen Bereich des Wellenleiters bzw. der Lichtwellenleiterplatte größer sein als in Randbereichen des Wellenleiters bzw. der Lichtwellenleiterplatte (Lichteinkopplungsbereich), wobei sich der Lichteinkopplungsbereich näher an den seitlich angebrachten Lichtquellen befindet. Durch eine höhere Flächenbelegungsdichte im zentralen Bereich des Wellenleiters bzw. der Lichtwellenleiterplatte ergibt sich eine im Wesentlichen höhere Auskoppeleffizienz in diesem zentralen Bereich, so dass Totalreflexionsverluste bei der lateralen Lichtführung im Wellenleiter von dem Lichteinkopplungsbereich zu dem zentralen Bereich des Wellenleiters bzw. der Lichtwellenleiterplatte wiederum ausgeglichen werden können. Dies ist dahin gehend vorteilhaft, dass auf der Objektebene eine homogene Beleuchtung erzielt werden kann.

Bei weiteren Ausführungsbeispielen kann sich eine Form der Umlenkstrukturen 130 oder die Anzahl der Umlenkstrukturen 130 je Fläche der Totzonen 119, in denen die Umlenkstrukturen 130 angeordnet sind, auf dem Wellenleiter 120 lateral ändern. Hierbei ist die Optikanordnung 100 beispielsweise ausgelegt, um eine vorgegebene räumliche Verteilung des in Richtung der Objektebene 111 abgelenkten Lichts 101 in der Objektebene 111 zu erhalten. Somit kann bei Ausführungsbeispielen eine Modifikation der räumlichen Charakteristik der Lichtverteilung auf der Objektfläche (bzw. in der Objektebene) erreicht werden.

Eine Anpassung der Form der Mikrostrukturen bzw. Umlenkstrukturen erfolgt beispielsweise dadurch, dass der Krümmungsradius, die Konik oder die Polynomkoeffizienten einer Freiformoberflächenbeschreibung derselben auf dem Wellenleiter lateral geändert wird. Durch das laterale Ändern der Form der Umlenkstrukturen auf dem Wellenleiter kann eine Optimierung der Effizienz und/oder der Beleuchtungsstärke und/oder der Beleuchtungsstärkeverteilung auf der Objektfläche bzw. in der Objektebene ermöglicht werden. Ferner kann durch das laterale Ändern der Anzahl der Umlenkstrukturen je Fläche der Totzonen bzw. durch die Anpassung der Anzahldichte der Mikrostrukturen (Variation der Anzahl von Strukturelementen bzw. Umlenkstrukturen pro Flächenintervall oder Totzone) zum einen eine möglichst große Homogenität oder zum anderen eine gezielte Inhomogenität der Beleuchtungsstärke auf der Objektfläche bzw. in der Objektebene erreicht werden. Das Erzeugen der gezielten Inhomogenität der Beleuchtungsstärke auf der Objektfläche kann beispielsweise dazu verwendet werden, um die Beleuchtung von nur ausgewählten Bereichen der Objektfläche zu ermöglichen.

Bei weiteren Ausführungsbeispielen weist der Wellenleiter 120 eine Mehrzahl von Blenden auf, die den in den Totzonen 119 angeordneten Umlenkstrukturen 130 zugeordnet sind. Beispielsweise weisen die Blenden jeweils eine Blendenöffnung auf, die ausgebildet sind, um den Durchlass des in Richtung der Objektebene 111 abgelenkten Lichts 101 zu variieren, um eine Winkelverteilung des in Richtung der Objektebene 111 abgelenkten Lichts 101 einzustellen.

Bei weiteren Ausführungsbeispielen ändert sich eine strukturelle Ausprägung der Umlenkstrukturen 130 auf dem Wellenleiter 120 lateral und/oder in Richtung der Objektebene 111. Beispielsweise sind die Umlenkstrukturen 130 ausgelegt, um eine vorgegebene Winkelverteilung des in Richtung der Objektebene 111 abgelenkten Lichts 101 zu erhalten.

Somit kann eine Modifikation der winkelabhängigen Charakteristik des Beleuchtungslichts erreicht werden. Dies wird beispielsweise dadurch realisiert, dass eine Kombination der Umlenkstrukturen (Mikrostrukturen) mit zonalen bzw. über der Einheitszelle (Totzone) einer jeweiligen Umlenkstruktur befindlichen variierenden Blenden (d.h. Blenden, deren jeweilige Blendenöffnung variiert werden kann) verwendet wird, um die angulare Abstrahlcharakteristik bzw. die Winkelverteilung des in Richtung der Objektebene abgelenkten Lichts einzustellen oder zu beeinflussen. Das Vorsehen von Blenden, die den in den Totzonen angeordneten Umlenkstrukturen zugeordnet sind, dient beispielsweise zu einer Dunkelfeldbeleuchtung oder zur Verhinderung von direkten Reflexen auf die Objektebene. Die jeweilige Blendenöffnung der Blenden kann beispielsweise so eingestellt werden, dass kleine Einstrahlwinkel des Beleuchtungslichts zur Normalen der Objektebene vermieden werden. Dies kann beispielsweise durch die Verwendung von ringförmigen, einseitig verspiegelten Blenden erfolgen. Die verspiegelten Oberflächen der Blenden sind beispielsweise dem Mehrkanalabbildungssystem 110 zugewandt.

Für die Änderung der strukturellen Ausprägung der Umlenkstrukturen in Richtung der Objektebene können beispielsweise verschiedene Umlenkstrukturen auf der dem Mehrkanalabbildungssystem zugewandten Seite 124 und auf der der Objektebene zugewandten Seite 122 des Wellenleiters angeordnet werden.

Ferner kann eine Kombination von verschiedenen Umlenkstrukturen (Mikrostrukturen), die sowohl lateral als auch axial möglich ist (d.h., die strukturelle Ausprägung der Umlenkstrukturen auf dem Wellenleiter ändert sich lateral und/oder in Richtung der Objektebene), dazu verwendet werden, um in der Mischung der Wirkungen aller Strukturen ein spezielles Winkelabstrahlverhalten zu erlangen.

Die Kombination der verschiedenen Umlenkstrukturen umfasst beispielsweise eine Kombination von Mikrostrukturen mit angerauten Flächen bzw. statistischen Streustrukturen.

Bei weiteren Ausführungsbeispielen weist die Optikanordnung 100 ferner eine Motorvorrichtung auf, die ausgelegt ist, um das Mehrkanalabbildungssystem 110 in Richtung der Objektebene 111 und in Richtung der Bildebene 112 kontrolliert zu bewegen. Die Motorvorrichtung ist beispielsweise so ausgelegt, dass ein Abbildungsmaßstab der optischen Kanäle 115 bei einer Bewegung des Mehrkanalabbildungssystems 110 zwischen der Objektebene 111 und der Bildebene 112 im Wesentlichen erhalten bleibt.

Ausführungsbeispiele umfassen somit eine Lichtquelle, die an mindestens einer Stirnseite einer Lichtwellenleiterplatte seitlich montiert ist und möglichst klein ausgeführt ist, eine Lichtwellenleiterplatte und auf einer oder beiden Seiten der Lichtwellenleiterplatte örtlich ausgeführte Umlenkstrukturen bzw. Mikrostrukturen zur homogenen (oder kontrolliert inhomogenen) Beleuchtung des Objektfelds bzw. der Objektebene.

Die seitlich einkoppelnden Lichtquellen können beispielsweise LED-Lichtquellen, OLED(organic light emitting diode)-Lichtquellen, CCFL(cold cathode fluorescent lamp)-Lichtröhren (z.B. Kaltkathodenröhren, Gasentladungsröhren) oder andere kleine Lichtquellen sein.

Ferner können die Lichtquellen beispielsweise aus einer Vielzahl von punktförmigen Lichtquellen bestehen oder durch entlang der längeren Seite der rechteckig geformten Lichtwellenleiterplatte bzw. der langen Dimension der Lichtwellenleiterplatte möglichst ausgedehnte emittierende Flächen (z.B. Flächenstrahler) gebildet werden.

Bei Ausführungsbeispielen kann die Winkelabstrahlungscharakteristik der Lichtquellen so eingestellt sein, dass dieselbe möglichst in einem großen Winkelbereich (z.B. Lambertsche Abstrahlcharakteristik) erfolgt, um eine homogene Beleuchtung der gesamten Objektfläche zu erzielen.

Hierbei ist insbesondere anzumerken, dass die Winkelabstrahlung in der lateralen Ebene möglichst einer Lambertverteilung (Strahlungsdichte in alle Richtungen innerhalb des Winkelbereiches von -90° bis 90° konstant) entsprechen sollte, während die Winkelabstrahlung in der dazu senkrechten Ebene möglichst nur innerhalb des Winkelbereiches der Totalreflexion im Lichtwellenleiter 120 erfolgen sollte. Dies bedeutet gleichsam eine optimale Einkopplung von Licht in den Lichtwellenleiter.

Bei weiteren Ausführungsbeispielen kann die Winkelabstrahlungscharakteristik der Lichtquellen hingegen durch Lichtquellen mit stark eingeschränkter Winkelabstrahlcharakteristik erzeugt werden, um dadurch eine richtungsabhängige Beleuchtung der Objektfläche bzw. der Objektebene zu erzielen.

Ferner können verschiedene spektrale Eigenschaften des Beleuchtungslichts bzw. der Lichtquellen bereitgestellt werden. So kann beispielsweise spektral breitbandiges Licht (z.B. weißes Licht), spektral schmalbandiges Licht (z.B. einfarbige Beleuchtung) oder eine Kombination schmalbandiger Lichtemissionen (z.B. Kombination der Beleuchtungsfarben rot, grün, blau; einzeln in der Intensität steuerbar) verwendet werden.

Bei Ausführungsbeispielen kann die Lichtwellenleiterplatte ein Material mit einem gegenüber der Umgebung (z.B. Luft) höheren Brechungsindex aufweisen. Die Lichtwellenleiterplatte kann beispielsweise aus Glas, Kunststoff oder einem anderen für einen gewählten Wellenlängenbereich transparenten Material bestehen. Ferner kann die Lichtwellenleiterplatte zumindest in den Bereichen der Gesichtsfelder der optischen Kanäle des Multiapertur-Abbildungssystems planparallel (planar) sein.

Bei Ausführungsbeispielen ist die örtliche Verteilung der Umlenkstrukturen bzw. der Mikrostrukturen so angepasst, dass sich diese in den Zonen außerhalb der Gesichtsfelder der optischen Kanäle des Multiapertur-Abbildungssystems auf der Lichtwellenleiterplatte befinden. Hierbei sind beispielsweise die folgenden Anordnungen möglich. Die örtliche Verteilung der Umlenkstrukturen bzw. Mikrostrukturen kann beispielsweise durch ein regelmäßiges Gitter (z.B. kartesisch, hexagonal und Ähnlichem), eine unregelmäßige Verteilung (z.B. statistische Verteilung oder andere Verteilung zur Anpassung der Flächenbelegung) oder eine Kombination aus diesen gekennzeichnet sein.

Das Material der Umlenkstrukturen bzw. der Mikrostrukturen sollte in seinen optischen Eigenschaften (Transmission, Brechungsindex etc.) möglichst gut mit denen der Lichtwellenleiterplatte übereinstimmen. Sie können beispielsweise ebenfalls aus Glas, Kunststoff, Polymer oder Photoresist bestehen.

Bei Ausführungsbeispielen sind verschiedene Formeigenschaften der Umlenkstrukturen bzw. Mikrostrukturen möglich. Für die Umlenkstrukturen bzw. Mikrostrukturen können beispielsweise linsenartige Oberflächenprofile (z.B. Mikrolinsen mit Krümmungsradius R=l/c und Konik k), pyramiden- oder kegelartige Strukturen (z.B. zur Erreichung einer speziellen Verteilung der Beleuchtungswinkel), raue Oberflächenbereiche (lichtstreuende Bereiche), diffraktive Strukturen (z.B. Beugungsgitter, Nanostrukturen) oder Mischformen derselben verwendet werden. Bei der Verwendung von linsenartigen Oberflächenprofilen ist ein Oberflächenprofil, welches die Strukturhöhe z über eine radiale Koordinate r von einem Mittelpunkt beschreibt, beispielsweise durch die folgende Beziehung gegeben:

$$z = \frac{cr^2}{1 + \sqrt{1 - (1+k)c^2 r^2}}$$

Bei Ausführungsbeispielen ist eine örtliche Variation bzw. laterale Änderung der Parameter der Umlenkstrukturen (Mikrostrukturen) vorteilhaft. Die örtliche Parametervariation kann z.B. zur Erreichung einer homogenen Objektfeldausleuchtung verwendet werden. Sofern linsenartige Oberflächenprofile (z.B. Mikrolinsen) verwendet werden, erlaubt eine Anpassung beispielsweise des Krümmungsradius R und der Konik k eine Anpassung der Auskoppeleffizienz in Abhängigkeit der Position auf der Lichtwellenleiterplatte. Ferner kann die örtliche Parametervariation durch eine Variation der Größe der Umlenkstrukturen bzw. Mikrolinsen (z.B. Durchmesser, Höhe) realisiert werden. Des Weiteren können beispielsweise weitere kleinere Mikrolinsen in kleinere Zwischenräume der Gesichtsfelder benachbarter optischer Abbildungskanäle (innerhalb der Totzonen) integriert werden. Hierbei kann beispielsweise eine Mischung verschiedener Größen derselben oder eine unterschiedliche Flächenfüllung verwendet werden.

Bei Ausführungsbeispielen kann eine Flächenbelegung bzw. die Flächenbelegungsdichte der im Bereich (Totzone) um die Gesichtsfelder der optischen Abbildungskanäle platzierten Umlenkstrukturen bzw. Mikrostrukturen über die Fläche des Wellenleiters bzw. der Lichtwellenleiterplatte variieren. Die Variation der Flächenbelegungsdichte ermöglicht die Anpassung der Menge des in Richtung des Objektes bzw. der Objektebene aus dem Lichtwellenleiter ausgekoppelten Lichts entsprechend einem Abstand eines jeweiligen Oberflächenelements des Lichtwellenleiters von den seitlich angebrachten Lichtquellen. Dies resultiert in einer Verbesserung der Beleuchtungshomogenität auf der ausgedehnten Objektfläche (Objektebene). Im Falle von linsenartigen Oberflächenprofilen (z.B. Mikrolinsen) ist dies beispielsweise durch zusätzliche Mikrolinsen innerhalb des zulässigen Bereichs (d.h. in den Totzonen außerhalb der Gesichtsfelder der optischen Kanäle des Abbildungssystems) bzw. durch kontrolliertes Auslassen bestimmter Bereiche (Fehlstellen) möglich.

Um das im Wellenleiter geführte Licht bzw. auftreffende Strahlen möglichst verlustfrei zu reflektieren und somit eine höhere Beleuchtungseffizienz zu erreichen, kann die Oberfläche der Umlenkstrukturen, wie beispielsweise der Mikrolinsen, mit einer reflektierenden Schicht (z.B. Metall, dielektrische Beschichtung) beschichtet werden, wie es anhand von Fig. 3 erläutert wurde.

Ferner kann durch das Vorsehen einer Antireflexionsschicht auf der der Objektebene zugewandten Seite des Wellenleiters, wie es bereits beschrieben wurde, eine Entspiegelung der planaren, objektseitigen Grenzfläche des Lichtwellenleiters zur Verhinderung von Rückreflexen in die einzelnen Gesichtsfelder der Abbildungskanäle erreicht werden.

Bei Ausführungsbeispielen kann eine Verspiegelung von kleineren Seitenflächenbereichen des Wellenleiters bzw. der Lichtwellenleiterplatte, an denen keine Lichtquellen angrenzen bzw. kein Licht eingekoppelt wird, vorgesehen werden, um dadurch ein Austreten des Lichts an diesen Flächen zu verhindern. Somit kann ein Lichtverlust an Seitenflächenbereichen des Wellenleiters bzw. der Lichtwellenleiterplatte minimiert werden.

Bei Ausführungsbeispielen können die Umlenkstrukturen bzw. Mikrostrukturen adaptiv ausgeführt sein (z.B. als Flüssigkristall-Mikrolinsen), um so die Auskoppeleffizienz zeitlich variabel zu gestalten.

Ausführungsbeispiele der vorliegenden Erfindung schaffen ein Verfahren zur optischen Abtastung einer Objektebene in in der Objektebene aneinandergrenzenden oder überlappenden Gesichtsfeldern einer Mehrzahl von optischen Kanälen eines Mehrkanalabbildungssystems. Das Verfahren weist beispielsweise die folgende Schritte auf. Licht wird in einem Wellenleiter, der zwischen der Objektebene und dem Mehrkanalabbildungssystem angeordnet ist, lateral geführt. Hierbei weist der Wellenleiter eine Mehrzahl von Umlenkstrukturen auf, die auf einer der Objektebene zugewandten Seite und/oder auf einer dem Mehrkanalabbildungssystem zugewandten Seite des Wellenleiters angeordnet sind. Ferner sind die Umlenkstrukturen in Totzonen zwischen den Gesichtsfeldern der optischen Kanäle angeordnet. Schließlich wird das geführte Licht in Richtung der Objektebene mit den Umlenkstrukturen angelenkt, so dass die Objektebene beleuchtet wird.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachfolgenden Patentansprüche und nicht durch die spezifischen Einzelheiten, die anhand der Beschreibung und der Erläuterung der Ausführungsbeispiele hierin präsentiert wurden, beschränkt sei.

Ausführungsbeispiele der vorliegenden Erfindung schaffen eine Optikanordnung mit einem extrem dünnen Beleuchtungsmodul zur Erzielung einer Auflichtbeleuchtung für ein Multiapertur-Abbildungssystem bzw. Mehrkanalabbildungssystem mit einem geringen Arbeitsabstand im Bereich weniger Millimeter.

Im Gegensatz zu einigen bekannten Techniken, bei denen eine Beschränkung auf Durchlicht erfolgt und die dadurch nur auf Anwendungen der Bildaufnahme von (semi-)transparenten oder selbstleuchtenden Objekten beschränkt sind, kann mit der erfindungsgemäßen Optikanordnung auch die Beobachtung nicht transparenter und nicht leuchtender Objekte im Falle von Auflichtbeleuchtung ermöglicht werden.

Ausführungsbeispiele schaffen ferner ein Konzept, bei dem die Umlenkstrukturen bzw. Mikrostrukturen eine ortsabhängige Lichtauskoppeleffizienz aufweisen. Dies ist dahin gehend vorteilhaft, dass dadurch eine homogene Objektausleuchtung gewährleistet werden kann.

Die Wirkung der Beleuchtungsvorrichtung bzw. des Beleuchtungsmoduls in einem mikrooptischen Abbildungssystem bzw. der erfindungsgemäßen Optikanordnung besteht darin, dass der Objektbereich (möglichst homogen) ausgeleuchtet werden kann. Der Vorteil der erfindungsgemäßen Optikanordnung besteht vor allem darin, dass eine große Objektfläche homogen beleuchtet werden kann, ohne dass dabei das Multiapertur-Abbildungssystem bzw. Mehrkanalabbildungssystem (speziell im Hinblick auf Kompaktheit und kurze Baulänge) beeinträchtigt wird.

Die vorliegende Erfindung kann beispielsweise für die mikroskopische Bildaufnahme, die Inspektion von nicht transparenten und nicht leuchtenden Objektoberflächen (z.B. Oberflächenprofile eines Fingers, technische Oberflächen, strukturierte Siliziumwafer), die Dokumentenaufnahme, die Fluoreszenzbildaufnahme (ähnlich zu einer Epifluoreszenzanordnung) oder Multiapertur-Kameras bei extremen Nahaufnahmen mit wenigen Millimetern Objektabstand verwendet werden.

## Patentansprüche

1. Optikanordnung (100), mit folgenden Merkmalen:

   einem Mehrkanalabbildungssystem (110) zur optischen Abtastung einer Objektebene (111) mit in der Objektebene (111) aneinandergrenzenden oder überlappenden Gesichtsfeldern (113) einer Mehrzahl von optischen Kanälen (115) des Mehrkanalabbildungssystems (110), wobei das Mehrkanalabbildungssystem (110) ausgelegt ist, um die Objektebene (111) über die Mehrzahl von optischen Kanälen (115) auf eine Bildebene (112) optisch abzubilden; und einem Wellenleiter (120), der zwischen der Objektebene (111) und dem Mehrkanalabbildungssystem (110) angeordnet ist, um Licht (101) im Wellenleiter (120) lateral zu führen, wobei der Wellenleiter (120) eine Mehrzahl von Umlenkstrukturen (130) aufweist, die auf einer der Objektebene (111) zugewandten Seite (122) und/oder auf einer dem Mehrkanalabbildungssystem (110) zugewandten Seite (124) des Wellenleiters (120) angeordnet sind, wobei die Umlenkstrukturen (130) in Totzonen (119) zwischen den Gesichtsfeldern (113) der optischen Kanäle (115) angeordnet sind, und wobei die Umlenkstrukturen (130) ausgelegt sind, um das geführte Licht (101) in Richtung der Objektebene (111) abzulenken, so dass die Objektebene (111) beleuchtet wird.

2. Die Optikanordnung (100) nach Anspruch 1, wobei das Mehrkanalabbildungssystem (110) für jeden optischen Kanal (115) eine Optik (114) mit einer Feldblende aufweist, die das Gesichtsfeld (113) des jeweiligen Kanals (115) bestimmt.

3. Die Optikanordnung (100) nach Anspruch 1 oder 2, wobei das Mehrkanalabbildungssystem (110) ausgelegt ist, um die Objektebene (111) über die Mehrzahl von optischen Kanälen (115) auf eine Bildebene (112) abzubilden, so dass sich in der Bildebene (112) ein Füllfaktor zwischen 90 und 100 % ergibt.

4. Die Optikanordnung (100) nach einem der Ansprüche 1 bis 3, wobei die Umlenkstrukturen (130) auf der dem Mehrkanalabbildungssystem (110) zugewandten Seite (124) des Wellenleiters (120) ausgelegt sind, um das geführte Licht (101) in Richtung der Objektebene (111) zu streuen oder zu reflektieren.

5. Die Optikanordnung (100) nach einem der Ansprüche 1 bis 4, wobei die Umlenkstrukturen (130) auf der dem Mehrkanalabbildungssystem (110) zugewandten Seite (124) des Wellenleiters (120) eine Mehrzahl von Mikrolinsen (330) aufweisen, die in Richtung des Mehrkanalabbildungssystems (110) gewölbt und mit einer reflektierenden Schicht (332) versehen sind.

6. Die Optikanordnung (100) nach einem der Ansprüche 1 bis 5, wobei die Umlenkstrukturen (130) auf der dem Mehrkanalabbildungssystem (110) zugewandten Seite (124) des Wellenleiters (120) an Gitterplätzen eines Gitters (205) angeordnet sind, wobei das Mehrkanalabbildungssystem (110) für jeden Kanal (115) eine Optik (114) aufweist, wobei optische Achsen (117) der Kanäle (115) an Zwischengitterplätzen des Gitters (205) angeordnet sind.

7. Die Optikanordnung (100) nach Anspruch 6, wobei das Gitter (205) ein regelmäßiges kartesisches oder hexagonales Gitter ist.

8. Die Optikanordnung (100) nach einem der Ansprüche 1 bis 7, wobei sich zwischen benachbarten Umlenkstrukturen (130) ein Parameter derselben lateral ändert, wobei der Parameter eine Eigenschaft eines Oberflächenprofils beschreibt.

9. Die Optikanordnung (100) nach einem der Ansprüche 1 bis 8, wobei sich eine Flächenbelegungsdichte der Umlenkstrukturen (130) auf dem Wellenleiter (120) lateral ändert.

10. Die Optikanordnung (100) nach einem der Ansprüche 1 bis 9, wobei eine Dichte, mit welcher optische Achsen (117) der optischen Kanäle (115) des Mehrkanalabbildungssystems (110) lateral verteilt sind, konstant ist.

11. Die Optikanordnung (100) nach einem der Ansprüche 1 bis 10, wobei die Gesichtsfelder (113) aller Kanäle (115) gleich sind.

12. Die Optikanordnung (100) nach einem der Ansprüche 1 bis 11, wobei die Umlenkstrukturen (130) auf der dem Mehrkanalabbildungssystem (110) zugewandten Seite (124) des Wellenleiters (120) eine Mehrzahl von adaptiven Mikrolinsen (330) aufweisen, wobei die adaptiven Mikrolinsen (330) ausgelegt sind, um eine Auskoppeleffizienz des im Wellenleiter (120) geführten Lichts (101) in Richtung der Objektebene (111) zeitlich zu variieren.

13. Die Optikanordnung (100) nach einem der Ansprüche 1 bis 12, die ferner eine oder mehrere Lichtquellen (150) aufweist, die seitlich neben dem Wellenleiter (120) angeordnet sind, wobei die eine oder mehreren Lichtquellen (150) ausgelegt sind, um Licht (101) seitlich in den Wellenleiter (120) einzukoppeln.

14. Die Optikanordnung (100) nach einem der Ansprüche 1 bis 13, wobei die Kanäle (115) des Mehrkanalabbildungssystems (110) zweidimensional verteilt sind und der Wellenleiter (120) als eine Lichtwellenleiterplatte ausgebildet ist.

15. Die Optikanordnung (100) nach Anspruch 14, wobei die Lichtwellenleiterplatte (120) rechteckig geformt ist, wobei die Optikanordnung (100) ferner eine oder mehrere Lichtquellen (150) aufweist, die seitlich neben der rechteckig geformten Lichtwellenleiterplatte (120) angeordnet sind, wobei die eine oder mehreren Lichtquellen (150) ausgelegt sind, um Licht von einer längeren Seite (202) der rechteckig geformten Lichtwellenleiterplatte (120) in dieselbe einzukoppeln.

16. Die Optikanordnung (100) nach einem der Ansprüche 1 bis 15, wobei der Wellenleiter (120) eine Antireflexionsschicht aufweist, die auf der der Objektebene (111) zugewandten Seite (122) des Wellenleiters (120) angeordnet ist, so dass Rückreflexe in die Gesichtsfelder (113) der optischen Kanäle (115) verhindert werden.

17. Die Optikanordnung (100) nach einem der Ansprüche 1 bis 16, die ferner eine oder mehrere Lichtquellen (150) und zugeordnete optische Filter aufweist, wobei die eine oder mehreren Lichtquellen (150) ausgelegt sind, um Licht (101) mit einer spektralen Eingangsbandbreite für die Einkopplung in den Wellenleiter (120) zu liefern, wobei die optischen Filter ausgelegt sind, um die spektrale Eingangsbandbreite des von der einen oder mehreren Lichtquellen (150) gelieferten Lichts (101) zu modifizieren, wobei die Optikanordnung (100) ausgelegt ist, um das in Richtung der Objektebene (111) abgelenkte Licht (101) mit einer modifizierten spektralen Ausgangsbandbreite für die Beleuchtung der Objektebene (111) zu erhalten.

18. Die Optikanordnung (100) nach einem der Ansprüche 1 bis 17, die ferner eine oder mehrere Lichtquellen (150) aufweist, wobei die eine oder mehreren Lichtquellen (150) ausgelegt sind, um Licht (101) mit einer spektralen Eingangsbandbreite für die Einkopplung in den Wellenleiter (120) zu liefern, wobei der Wellenleiter (120) ausgelegt ist, um die spektrale Eingangsbandbreite des von der einen oder mehreren Lichtquellen (150) gelieferten Lichts (101) zu modifizieren, wobei die Optikanordnung (100) ausgelegt ist, um das in Richtung der Objektebene (111) abgelenkte Licht (101) mit einer modifizierten spektralen Ausgangsbandbreite für die Beleuchtung der Objektebene (111) zu erhalten.

19. Die Optikanordnung (100) nach Anspruch 17 oder 18, wobei die modifizierte spektrale Ausgangsbandbreite kleiner als die spektrale Eingangsbandbreite ist.

20. Die Optikanordnung (100) nach einem der Ansprüche 1 bis 19, wobei sich eine Form der Umlenkstrukturen (130) oder die Anzahl der Umlenkstrukturen (130) je Fläche der Totzonen (119), in denen die Umlenkstrukturen (130) angeordnet sind, auf dem Wellenleiter (120) lateral ändert, wobei die Optikanordnung (100) ausgelegt ist, um eine vorgegebene räumliche Verteilung des in Richtung der Objektebene (111) abgelenkten Lichts (101) in der Objektebene (111) zu erhalten.

21. Die Optikanordnung (100) nach einem der Ansprüche 1 bis 20, wobei der Wellenleiter (120) eine Mehrzahl von Blenden aufweist, die den in den Totzonen (119) angeordneten Umlenkstrukturen (130) zugeordnet sind, wobei die Blenden jeweils eine Blendenöffnung aufweisen, die ausgebildet sind, um den Durchlass des in Richtung der Objektebene (111) abgelenkten Lichts (101) zu variieren, um eine Winkelverteilung des in Richtung der Objektebene (111) abgelenkten Lichts (101) einzustellen.

22. Die Optikanordnung (100) nach einem der Ansprüche 1 bis 21, wobei sich eine strukturelle Ausprägung der Umlenkstrukturen (130) auf dem Wellenleiter (120) lateral und/oder in Richtung der Objektebene (111) ändert, wobei die Umlenkstrukturen (130) ausgelegt sind, um eine vorgegebene Winkelverteilung des in Richtung der Objektebene (111) abgelenkten Lichts (101) zu erhalten.

23. Verfahren zur optischen Abtastung einer Objektebene (111) mit in der Objektebene (111) aneinandergrenzenden oder überlappenden Gesichtsfeldern (113) einer Mehrzahl von optischen Kanälen (115) eines Mehrkanalabbildungssystems (110), wobei das Mehrkanalabbildungssystem (110) ausgelegt ist, um die Objektebene (111) über die Mehrzahl von optischen Kanälen (115) auf eine Bildebene (112) optisch abzubilden, mit:

lateralesführen von Licht (101) in einem Wellenleiter (120), der zwischen der Objektebene (111) und dem Mehrkanalabbildungssystem (110) angeordnet ist,
wobei der Wellenleiter (120) eine Mehrzahl von Umlenkstrukturen (130) aufweist, die auf einer der Objektebene (111) zugewandten Seite (122) und/oder auf einer dem Mehrkanalabbildungssystem (110) zugewandten Seite (124) des Wellenleiters (120) angeordnet sind,
wobei die Umlenkstrukturen (130) in Totzonen (119) zwischen den Gesichtsfeldern (113) der optischen Kanäle (115) angeordnet sind, und
Ablenken des geführten Lichts (101) in Richtung der Objektebene (111) mit den Umlenkstrukturen (130), so dass die Objektebene (111) beleuchtet wird.

**Claims**

1. An optics arrangement (100) comprising:

   a multi-channel imaging system (110) for optical sampling of an object plane (111) with visual fields (113), abutting or overlapping in the object plane (111), of a plurality of optical channels (115) of the multi-channel imaging system (110), the multi-channel imaging system (110) being configured to optically image the object plane (111) onto an image plane (112) via the plurality of optical channels (115); and
   a waveguide (120) arranged between the object plane (111) and the multi-channel imaging system (110) for guiding light (101) laterally in the waveguide (120),
   wherein the waveguide (120) comprises a plurality of redirecting structures (130) arranged on a side (122) of the waveguide (120) facing the object plane (111) and/or on a side (124) of the waveguide (120) facing the multi-channel imaging system (110),
   wherein the redirecting structures (130) are arranged in dead zones (119) between the visual fields (113) of the optical channels (115), and
   wherein the redirecting structures (130) are configured to deflect the guided light (101) in the direction of the object plane (111) such that the object plane (111) is illuminated.

2. The optics arrangement (100) in accordance with claim 1, wherein the multi-channel imaging system (110) comprises, for each optical channel (115), optics (114) comprising a field aperture which determines the visual field (113) of the respective channel (115).

3. The optics arrangement (100) in accordance with claims 1 or 2, wherein the multi-channel imaging system (110) is configured to image the object plane (111) onto an image plane (112) via the plurality of optical channels (115) such that the result in the image plane (112) is a fill factor between 90 and 100%.

4. The optics arrangement (100) in accordance with any of claims 1 to 3, wherein the redirecting structures (130) are implemented on the side (124) of the waveguide (120) facing the multi-channel imaging system (110) so as to scatter or reflect the guided light (101) in the direction of the object plane (111).

5. The optics arrangement (100) in accordance with any of claims 1 to 4, wherein the redirecting structures (130) on the side (124) of the waveguide (120) facing the multi-channel imaging system (110) comprise a plurality of microlenses (330) which are curved in the direction of the multi-channel imaging system (110) and are provided with a reflective layer (332).

6. The optics arrangement (100) in accordance with any of claims 1 to 5, wherein the redirecting structures (130) on the side (124) of the waveguide (120) facing the multi-channel imaging system (110) are arranged at grating positions of a grating (205), the multi-channel imaging system (110) comprising, for each channel (115), optics (114), optical axes (117) of the channels (115) being arranged at intermediate grating positions of the grating (205).

7. The optics arrangement (100) in accordance with claim 6, wherein the grating (205) is a regular Cartesian or hexagonal grating.

8. The optics arrangement (100) in accordance with any of claims 1 to 7, wherein, between neighboring redirecting structures (130), a parameter thereof changes laterally, the parameter describing a characteristic of a surface profile.

9. The optics arrangement (100) in accordance with any of claims 1 to 8, wherein an area occupancy of the redirecting structures (130) on the waveguide (120) changes laterally.

10. The optics arrangement (100) in accordance with any of claims 1 to 9, wherein a density at which optical axes (117) of the optical channels (115) of the multi-channel imaging system (110) are distributed laterally is constant.

11. The optics arrangement (100) in accordance with any of claims 1 to 10, wherein the visual fields (113) of all the channels (115) are equal.

12. The optics arrangement (100) in accordance with any of claims 1 to 11, wherein the redirecting structures (130) on the side (124) of the waveguide (120) facing the multi-channel imaging system (110) comprise a plurality of adaptive microlenses (330), the adaptive microlenses (330) being configured to vary over time coupling-out efficiency of the light (101) guided in the waveguide (120) in the direction of the object plane (110).

13. The optics arrangement (100) in accordance with any of claims 1 to 12, further comprising one or several light sources (150) arranged laterally next to the waveguide (120), the one or several light sources (150) being configured to couple light (101) into the waveguide (120) laterally.

**14.** The optics arrangement (100) in accordance with any of claims 1 to 13, wherein the channels (115) of the multi-channel imaging system (110) are distributed in two dimensions and the waveguide (120) is implemented as an optical waveguide plate.

**15.** The optics arrangement (100) in accordance with claim 14, wherein the optical waveguide plate (120) is shaped to be rectangular, the optics arrangement (100) additionally comprising one or several light sources (115) arranged laterally next to the rectangularly-shaped optical waveguide plate (120), the one or several light sources (150) being configured to couple light from a longer side (202) of the rectangularly-shaped optical waveguide plate (120) into same.

**16.** The optics arrangement (100) in accordance with any of claims 1 to 15, wherein the waveguide (120) comprises an anti-reflection layer arranged on the side (122) of the waveguide (120) facing the object plane (111) so that back-reflections to the visual fields (113) of the optical channels (115) are prevented.

**17.** The optics arrangement (100) in accordance with any of claims 1 to 16, additionally comprising one or several light sources (150) and associated optical filters, the one or several light sources (150) being configured to provide light (101) of a spectral input bandwidth for coupling-in into the waveguide (120), the optical filters being configured to modify the spectral input bandwidth of the light (101) provided by the one or several light sources (150), the optics arrangement (100) being configured to obtain the light (101) deflected in the direction of the object plane (111) at a modified spectral output bandwidth for illuminating the object plane (111).

**18.** The optics arrangement (100) in accordance with any of claims 1 to 17, additionally comprising one or several light sources (150), the one or several light sources (150) being configured to provide light (101) of a spectral input bandwidth for coupling-in into the waveguide (120), the waveguide (120) being configured to modify the spectral input bandwidth of the light (101) provided by the one or several light sources (150), the optics arrangement (100) being configured to obtain the light (101) deflected in the direction of the object plane (111) at a modified spectral output bandwidth for illuminating the object plane (111).

**19.** The optics arrangement (100) in accordance with claims 17 or 18, wherein the modified spectral output bandwidth is smaller than the spectral input bandwidth.

**20.** The optics arrangement (100) in accordance with any of claims 1 to 19, wherein a shape of the redirecting structures (130) or the number of redirecting structures (130) per area of dead zones (119) where the redirecting structures (130) are arranged changes laterally on the waveguide (120), the optics arrangement (100) being configured to obtain in the object plane (111) a predetermined spatial distribution of the light (101) deflected in the direction of the object plane (111).

**21.** The optics arrangement (100) in accordance with any of claims 1 to 20, wherein the waveguide (120) comprises a plurality of apertures associated to the redirecting structures (130) arranged in the dead zones (119), the apertures each comprising an aperture opening configured to vary the transmission of the light (101) deflected in the direction of the object plane (111) so as to adjust an angular distribution of the light (101) deflected in the direction of the object plane (111).

**22.** The optics arrangement (100) in accordance with ay of claims 1 to 21, wherein a structural implementation of the redirecting structures (130) on the waveguide (120) changes laterally and/or in the direction of the object plane (111), the redirecting structures (130) being configured to obtain a predetermined angular distribution of the light (101) deflected in the direction of the object plane (111).

**23.** A method for optical sampling of an object plane (111) with visual fields (113), abutting or overlapping in the object plane (111), of a plurality of optical channels (115) of a multi-channel imaging system (110), the multi-channel imaging system (110) being configured to optically image the object plane (111) onto an image plane (112) via the plurality of optical channels (115), comprising:

laterally guiding light (101) in a waveguide (120) arranged between the object plane (111) and the multi-channel imaging system (110), wherein the waveguide (120) comprises a plurality of redirecting structures (130) arranged on a side (122) of the waveguide (120) facing the object plane (111) and/or on a side (124) of the waveguide (120) facing the multi-channel imaging system (110), wherein the redirecting structures (130) are arranged in dead zones (119) between the visual fields (113) of the optical channels (115), and deflecting the guided light (101) in the direction of the object plane (111) using the redirecting structures (130) such that the object plane (111) is illuminated.

## Revendications

1. Ensemble optique (100), aux caractéristiques suivantes:

   un système d'imagerie multicanal (110) destiné à balayer optiquement un plan d'objet (111) à champs de vision adjacents ou se recouvrant (113) dans le plan d'objet (111) d'une pluralité de canaux optiques (115) du système d'imagerie multicanal (110), le système d'imagerie multicanal (110) étant conçu pour reproduire optiquement le plan objet (111) par l'intermédiaire de la pluralité de canaux optiques (115) sur un plan d'image (112); et
   un guide d'ondes (120) qui est disposé entre le plan d'objet (111) et le système d'imagerie multicanal (110) pour guider latéralement la lumière (101) dans le guide d'ondes (120),
   dans lequel le guide d'ondes (120) présente une pluralité de structures de déviation (130) disposées sur une face (122) orientée vers le plan d'objet (111) et/ou sur une face (124) orientée vers le système d'imagerie multicanal (110) du guide d'ondes (120),
   dans lequel les structures de déviation (130) sont disposées dans des zones mortes (119) entre les champs de vision (113) des canaux optiques (115), et
   dans lequel les structures de déviation (130) sont conçues pour dévier la lumière guidée (101) en direction du plan d'objet (111), de sorte que le plan objet (111) soit illuminé.

2. Ensemble optique (100) selon la revendication 1, dans lequel le système d'imagerie multicanal (110) présente, pour chaque canal optique (115), une optique (114) avec un diaphragme de champ qui détermine le champ de vision (113) du canal respectif (115).

3. Ensemble optique (100) selon la revendication 1 ou 2, dans lequel le système d'imagerie multicanal (110) est conçu pour reproduire le plan d'objet (111) par l'intermédiaire de la pluralité de canaux optiques (115) sur un plan d'image (112), de sorte que résulte dans le plan d'image (112) un facteur de remplissage compris entre 90 et 100%.

4. Ensemble optique (100) selon l'une des revendications 1 à 3, dans lequel les structures de déviation (130) sont placées sur la face (124) du guide d'ondes (120) orientée vers le système d'imagerie multicanal (110), pour diffuser ou refléter la lumière guidée (101) en direction du plan d'objet (111).

5. Ensemble optique (100) selon l'une quelconque des revendications 1 à 4, dans lequel les structures de déviation (130) présentent sur la face (124) du guide d'ondes (120) orientée vers le système d'imagerie multicanal (110) une pluralité de microlentilles (330) qui sont bombées en direction du système d'imagerie multicanal (110) et pourvues d'une couche réfléchissante (332).

6. Ensemble optique (100) selon l'une des revendications 1 à 5, dans lequel les structures de déviation (130) sont disposées, sur la face (124) du guide d'ondes (120) orientée vers le système d'imagerie multicanal (110), à des emplacements d'une grille (205), le système d'imagerie multicanal (110) présentant, pour chaque canal (115), une optique (114), les axes optiques (117) des canaux (115) étant disposés à des emplacements intermédiaires de la grille (205).

7. Ensemble optique (100) selon la revendication 6, dans lequel la grille (205) est une grille cartésienne ou hexagonale régulière.

8. Ensemble optique (100) selon l'une des revendications 1 à 7, dans lequel entre structures de déviation (130) adjacentes varie latéralement un paramètre de ces dernières, le paramètre décrivant une propriété d'un profil de surface.

9. Ensemble optique (100) selon l'une des revendications 1 à 8, dans lequel varie latéralement une densité d'occupation de surface des structures de déviation (130) sur le guide d'ondes (120).

10. Ensemble optique (100) selon l'une des revendications 1 à 9, dans lequel est constante une densité selon laquelle sont répartis latéralement les axes optiques (117) des canaux optiques (115) du système d'imagerie multicanal (110).

11. Ensemble optique (100) selon l'une des revendications 1 à 10, dans lequel les champs de vision (113) de tous les canaux (115) sont identiques.

12. Ensemble optique (100) selon l'une des revendications 1 à 11, dans lequel les structures de déviation (130) présentent, sur la face sur (124) du guide d'ondes (120) orientée vers le système d'imagerie multicanal (110), une pluralité de microlentilles adaptatives (330), les microlentilles adaptatives (330) étant adaptées pour faire varier dans le temps l'efficacité de découplage de la lumière (101) guidée dans le guide d'ondes (120) en direction du plan d'objet (111).

13. Ensemble optique (100) selon l'une des revendications 1 à 12, présentant par ailleurs une ou plusieurs sources de lumière (150) disposées latéralement à côté du guide d'ondes (120), dans lequel les une ou plusieurs sources de lumière (150) sont conçues pour coupler de la lumière (101) latéralement dans le guide d'onde (120).

14. Ensemble optique (100) selon l'une des revendications 1 à 13, dans lequel les canaux (115) du système d'imagerie multicanal (110) sont répartis de manière bidimensionnelle, et le guide d'onde (120) se présente sous forme de plaque de conducteurs à fibres optiques.

15. Ensemble optique (100) selon la revendication 14, dans lequel la plaque de conducteurs à fibres optiques (120) est réalisée de forme rectangulaire, l'ensemble optique (100) comprenant par ailleurs une ou plusieurs sources de lumière (150) qui sont disposées latéralement à côté de la plaque de conducteurs à fibres optiques réalisée de forme rectangulaire (120), les une ou plusieurs sources de lumière (150) étant conçues pour coupler de la lumière d'un côté long (202) de la plaque de conducteurs à fibres optiques réalisée de forme rectangulaire (120) dans cette dernière.

16. Ensemble optique (100) selon l'une des revendications 1 à 15, dans lequel le guide d'ondes (120) présente une couche anti-réfléchissante disposée sur la face (122) du guide d'ondes (120) orientée vers le plan d'objet (111), de sorte que soient évitées les rétro-réflexions dans les champs de vision (113) des canaux optiques (115).

17. Ensemble optique (100) selon l'une des revendications 1 à 16, présentant par ailleurs une ou plusieurs sources de lumière (150) et des filtres optiques associés, les une ou plusieurs sources de lumière (150) étant conçues pour fournir de la lumière (101) de largeur de bande spectrale d'entrée pour le couplage dans le guide d'ondes (120), les filtres optiques étant conçus pour modifier la largeur de bande spectrale d'entrée de la lumière (101) fournie par les une ou plusieurs sources de lumière (150), l'ensemble optique (100) étant conçu pour recevoir la lumière (101) déviée en direction du plan d'objet (111) d'une largeur de bande spectrale de sortie modifiée pour l'illumination du plan objet (111).

18. Ensemble optique (100) selon l'une des revendications 1 à 17, présentant par ailleurs une ou plusieurs sources de lumière (150), les une ou plusieurs sources de lumière (150) étant conçues pour fournir de la lumière (101) d'une largeur de bande spectrale d'entrée pour le couplage dans le guide d'ondes (120), le guide d'onde (120) étant conçu pour modifier la largeur de bande spectrale d'entrée de la lumière (101) fournie par les une ou plusieurs sources de lumière (150), l'ensemble optique (100) étant conçu pour recevoir la lumière (101) déviée en direction du plan d'objet (111) de largeur de bande spectrale de sortie modifiée pour l'illumination du plan objet (111).

19. Ensemble optique (100) selon la revendication 17 ou 18, dans lequel la largeur de bande spectrale de sortie modifiée est plus petite que la largeur de bande spectrale d'entrée.

20. Ensemble optique (100) selon l'une des revendications 1 à 19, dans lequel une forme des structures de déviation (130) ou le nombre de structures de déviation (130) par face des zones mortes (119) dans lesquelles sont disposées les structures de déviation (130) varie latéralement sur le guide d'ondes (120), l'ensemble optique (100) étant conçu pour obtenir une distribution spatiale prédéterminée de la lumière (101) déviée en direction dans le plan d'objet (111).

21. Ensemble optique (100) selon l'une des revendications 1 à 20, dans lequel le guide d'ondes (120) présente une pluralité de diaphragmes associés aux structures de déviation (130) disposées dans les zones mortes (119), les diaphragmes présentant, chacun, une ouverture de diaphragme qui est réalisée pour faire varier le passage de la lumière (101) déviée en direction du plan d'objet (111), pour régler une distribution angulaire de la lumière (101) déviée en direction du plan d'objet (111).

22. Ensemble optique (100) selon l'une des revendications 1 à 21, dans lequel varie latéralement et/ou en direction du plan d'objet (111) un impact structurel des structures de déviation (130) sur le guide d'ondes (120), les structures de déviation (130) étant conçues pour obtenir une distribution angulaire prédéterminée de la lumière (101) déviée en direction du plan d'objet (111).

23. Procédé de balayage optique d'un plan d'objet (111) à champs de vision adjacents ou se recouvrant (113) dans le plan d'objet (111) d'une pluralité de canaux optiques (115) d'un système d'imagerie multicanal (110), le système d'imagerie multicanal (110) étant conçu pour reproduire optiquement le plan objet (111) par l'intermédiaire de la pluralité de canaux optiques (115) sur un plan d'image (112); avec le fait de:

guider latéralement la lumière (101) dans une guide d'ondes (120) disposé entre le plan d'objet (111) et le système d'imagerie multicanal (110), dans lequel le guide d'ondes (120) présente une pluralité de structures de déviation (130) disposées sur une face (122) orientée vers le plan d'objet (111) et/ou une face (124) orientée vers le système d'imagerie multicanal (110) du guide d'ondes (120),

dans lequel les structures de déviation (130) sont disposées dans des zones mortes (119) entre les champs de vision (113) des canaux optiques (115), et

dévier la lumière guidée (101) en direction du plan d'objet (111) par les structures de déviation (130), de sorte que le plan objet (111) soit illuminé.

100

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009047361 A1
- DE 102009005092 A1
- US 6734929 B2
- US 6806922 B2
- DE 10244444 A1
- US 5465311 A
- US 5515184 A
- US 6429913 B2
- US 6750996 B2
- US 7027671 B2